# EUROPEAN PATENT APPLICATION

(11) **EP 1 555 460 A1**
(43) Date of publication of application: **20.07.2005**
(21) Application number: 02808027.3
(22) Date of filing: 21.10.2002
(51) Int. Cl.: F16H 48/08

(54) **DIFFERENTIAL GEAR FOR VEHICLE**

(71) Applicant: Kabushiki Kaisha Ondo Kousakusyo, Aki-gun, Hiroshima 737-1205 (JP)
(72) Inventor: SUGETA, Mitsuharu, K. K. ONDO KOUSAKUSYO, Aki-gun, Hiroshima 737-1205 (JP); SHIGEMASA, Masayoshi, K. K. ONDO KOUSAKUSYO, Aki-gun, Hiroshima 737-1205 (JP)
(74) Representative: Senior, Alan Murray
(86) International application number: PCT/JP2002/010898
(87) International publication number: WO 2004/036089

(57) **Abstract**

The vehicle differential device 1 comprises a differential gear mechanism 3 which has a pair of side gears 21, two pinions 22 engaged with side gears 21, and a pinion shaft 23 pivotally supporting the two pinions 22, a ring gear 5 with which a annular reinforcing member 6 is integrally formed and into which the rotational driving force from the engine is input, and a gear case 4 with an integrated structure which has a flange part 10 for fastening the ring gear 5, two pivot-supporting walls 11 in which pinion shaft holes 15 supporting the pinion shaft 23 are formed, and a gear installation opening window 12 that is formed between the two pivot-supporting walls 11, and which accommodates the differential gear mechanism 3. In this vehicle differential device, an annular reinforcing member 6 is fit over the two pivot-supporting walls-11 and fastened so as to overlap with at least the pinion shaft holes 15 of the two pivot-supporting walls 11.

## Description

### TECHNICAL FIELD

The present invention relates to a vehicle differential device, and more particularly relates to a vehicle differential device which has a gear case with an integrated structure.

### BACKGROUND OF THE INVENTION

A vehicle differential devices is a device that transmits the rotational driving force from the engine of the vehicle to the driving wheels via drive shafts; such device has the function of allowing the differential movement of the inside and outside driving wheels during turning.

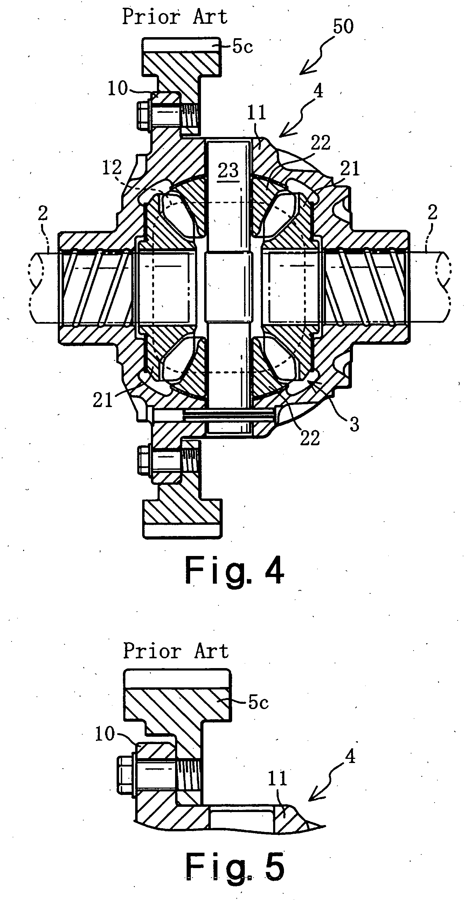

As is shown in Fig. 4, a conventional vehicle differential device 50 comprises a differential gear mechanism 3 which has a pair of side gears 21, pinions 22 engaging with these side gears 21, pinion shafts 23 that pivotally support the pinions, a gear case 4 with an integrated structure that accommodates the differential gear mechanism 3, a ring gear 5c into which the rotational driving force from the engine is input, a differential case (not shown) that accommodates lubricating oil and the abovementioned gear case 4, ring gear 5c and the like.

The gear case 4 has a flange part 10 to which the ring gear 5c is fastened, pivot-supporting walls 11, and a pair of opening windows 12 used for gear installation. For positioning purposes, the ring gear 5c is mounted so that this gear is in contact with the outer circumferential surface of the flange part 10 as shown in Fig. 4, or so that this gear is in contact with a portion of the outer circumferential surfaces of the pivot-supporting walls 11 as shown in Fig. 5.

This vehicle differential device 50 is devised as follows: namely, when the rotational driving force from the engine is input into the ring gear 5c, the gear case 4 rotates about the axial center of the drive shaft 2; along with this rotation, the pinions 22 and side gears 21 also revolve about the axial center of the drive shaft 2. Furthermore, when the vehicle turns, the pinions 22 rotate about the axial centers of the pinion shafts 23, and thus permit differential motion of the inside and outside driving wheels.

In this vehicle differential device 50, the gear case 4 is formed as an integrated structure; as a result, the number of required parts is reduced, and a reduction of the manufacturing cost and simplification of the assembly work are achieved. However, since the gear case 4 is formed as a integrated structure, a large installation opening window 12 used for the installation of the differential gear mechanism 3 inside the gear case 4 must be formed; accordingly, it is difficult to maintain the rigidity of the gear case 4 at a sufficient value.

It is an object of the present invention to provide a vehicle differential device in which an annular reinforcing member is installed in order to effectively reinforce the gear case formed with an integrated structure.

### DISCLOSURE OF THE INVENTION

The vehicle differential device of the present invention is a vehicle differential device that transmits the rotational driving force from the engine of a vehicle to driving wheels via drive shafts, comprising a differential gear mechanism that has a pair of side gears, a plurality of pinions engaged with these side gears, and one or more pinion shafts that pivotally supporting these pinions, a ring gear into which the rotational driving force from the abovementioned engine is input, a gear case with an integrated structure which has a flange part to which the abovementioned ring gear is fastened, a plurality of pivot-supporting walls in which pinion shaft holes supporting the pinion shafts are formed, and gear installation opening windows that are formed between the plurality of pivot-supporting walls, and which accommodates the differential gear mechanism, and an annular reinforcing member which is fit over the plurality of pivot-supporting walls and fastened so as to overlap with at least the pinion shaft holes of the abovementioned plurality of pivot-supporting walls.

In this vehicle differential device, when the rotational driving force from the engine is transmitted, the gear case rotates about the axial center of the drive shaft; furthermore, along with this rotation, the pinions that are pivotally supported on the pinion shafts revolve about the axial center of the drive shaft, and the side gears engaged with the pinions rotate, so that the rotational driving force is transmitted to the driving wheels via the drive shafts. Furthermore, when the vehicle turns, the pinions rotate about the axial centers of the pinion shafts, so that differential motion of the inside and outside driving wheels is permitted.

In this vehicle differential device, since the gear case is formed with an integrated structure, the number of parts required is reduced; furthermore, the manufacturing cost of the vehicle differential device is reduced, and the assembly process is simplified.

In the gear case of this vehicle differential device, which has an integrated structure, portions of the gear installation opening windows that are formed between the plurality of pivot-supporting walls are covered by the annular reinforcing member that is fit over the plurality of pivot-supporting walls and fastened so that this reinforcing member overlaps with at least the pinion shaft holes of the plurality of pivot-supporting walls; as a result, the gear case is reinforced.

Here, preferable modifications applicable to the present invention will be described.
a) The abovementioned annular reinforcing member is integrally constructed with the ring gear. Accordingly, in this vehicle differential device, an annular reinforcing member is provided without increasing the number of parts required.
b) The abovementioned annular reinforcing member is constructed separately from the ring gear, and this annular reinforcing member and the ring gear are fastened to the flange part by a plurality of common bolts. Accordingly, in this vehicle differential device, an annular reinforcing member is provided without complicating the construction of the vehicle differential device.
c) An output gear is formed separately from the abovementioned ring gear on the outer circumferential part of the annular reinforcing member. Accordingly, in this vehicle differential device, it is possible to prevent an increase in the number of parts required by forming the output gear required in four wheel drive vehicles as an annular reinforcing member, and the annular reinforcing member and output gear can be constituted by the same part by effectively utilizing the annular reinforcing member.
d) The abovementioned annular reinforcing member is fit over the plurality of pivot-supporting walls and fastened by press fitting. Accordingly, the annular reinforcing member maintains the function of reinforcing the gear case.

### BRIEF DESCRIPTION OF THE DRAWINGS

Fig. 1 is a sectional view of a vehicle differential device according to an embodiment of the present invention;
Fig. 2 is a sectional view of a vehicle differential device according to a modification;
Fig. 3 is a sectional view of a vehicle differential device according to another modification;
Fig. 4 is a sectional view of a conventional vehicle differential device; and
Fig. 5 is a partial sectional view of another conventional vehicle differential device.

### PREFERRED EMBODIMENT OF THE INVENTION

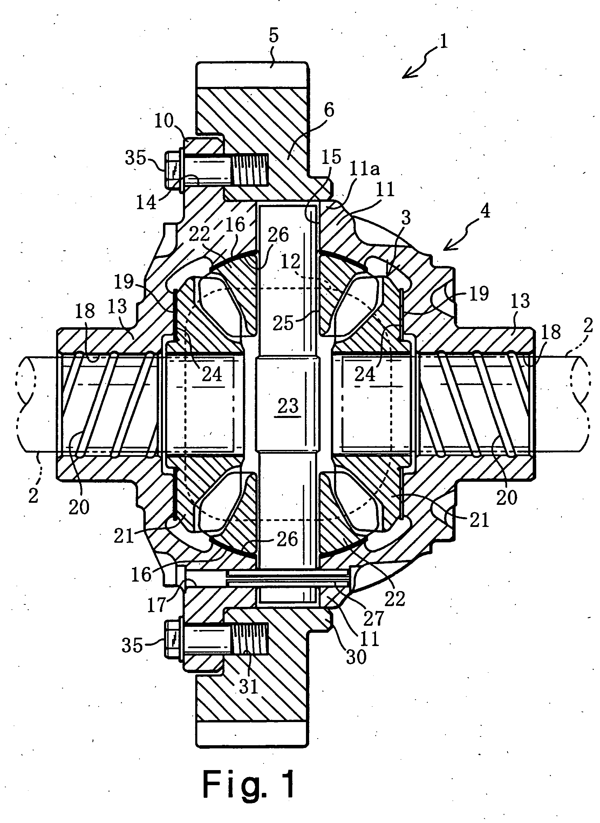

An embodiment of the present invention will be described below with reference to the attached drawings. Furthermore, descriptions will be made on the basis of the vertical direction and left-right direction in Fig. 1.

The vehicle differential device 1 of the present embodiment transmits the rotational driving force from the engine of the vehicle to the driving wheels via a pair of drive shafts 2.

As is shown in Fig. 1, the vehicle differential device 1 comprises a differential gear mechanism 3, a gear case 4 with an integrated structure that accommodates the differential gear mechanism 3, a ring gear 5 into which the rotational driving force from the engine is input, an annular reinforcing member 6 that is integrally constructed with the ring gear 5, a differential case (not shown) that accommodates these constituent members and lubricating oil and the like.

The gear case 4 accommodates the differential gear mechanism 3. The gear case 4 has a flange part 10 to which the ring gear 5 is fastened, a pair of pivot-supporting walls 11 that are connected to the right end of the flange part 10, a pair of gear installation opening windows 12 that are formed between the pivot-supporting walls 11, and a pair of drive shaft supporting members 13 (left and right members) that support the drive shafts 2. Twelve bolt holes 14 are formed in the flange part 10 at equal intervals in the circumferential direction. A pinion shaft hole 15 that supports the corresponding pinion shaft 23 is formed in each of the pivot-supporting walls 11. A thick pivot-supporting part 11a for supporting the pressing force from the corresponding pinion shaft 23, which is formed in substantially a circular shape as seen in plan view, with a diameter that is approximately twice the diameter of the pinion shaft hole 15, is formed on the outer circumferential part of each pivot-supporting wall 11 so as to surround each pinion shaft hole 15, an a partially spherical seating surface 16 that receives the corresponding pinion 22 is formed on the inside surface of each pivot-supporting wall 11. Furthermore, a pin hole 17 into which a spring pin 27 is inserted is formed in the outer circumferential part of the pivot-supporting wall 11 on the lower side. A shaft hole 18 into which the drive shaft 2 is inserted is formed concentrically in each drive shaft supporting part 13, and a seating surface 19 receiving the corresponding side gear 21 is formed on the inner surface of each drive shaft supporting part 13 that receives the side gear 21. Oil grooves 20 circulating oil to the outer circumferential surface of the drive shaft 2 are formed in the inner circumferential surfaces of the shaft holes 18.

The differential gear mechanism 3 has a pair of side gears 21 (left and right side gears), two pinions 22 engaged with these side gears 21, and a pinion shaft 23 pivotally supporting these two pinions 22. The respective side gears 21 are mounted on the corresponding drive shaft 2 so that relative rotation is impossible, and thrust washers 24 that ensure secure engagement of the side gears 21 with the pinions 22 are mounted between the respective side gears 21 and the seating surfaces 19 of the gear case 4. Shaft holes 25 for inserting the pinion shaft 23 are formed in the pinions 22. Thrust washers 26 are mounted between the respective pinions 22, and the seating surfaces 16 of the gear case 4. The pinion shaft 23 is inserted into pinion shaft holes 15 of the respective pivot-supporting walls 11 and the shaft holes 25 formed in the pinions 25, and sliding movement is prevented by the spring pins 27 inserted into the pin holes 17 in the lower part of the outer circumferential part of the gear case 4. The side gears 21, pinions 22 and thrust washers 24, 26 are inserted via the gear installation opening windows 12 of the gear case 4, and are installed inside the gear case 4. However, the thrust washers 26 may be omitted.

The annular reinforcing member 6 is a member for reinforcing the gear case' 4. This annular reinforcing member 6 is integrally constructed with the ring gear 5. The annular reinforcing member 6 is formed in the shape of a ring; the width of this member 6 is set as a dimension that is substantially the same as the distance from the right end of the flange part 10 to the right end of the pivot-supporting part 11a, and the thickness of this member 6 is set at a value that allows reinforcement of the gear case 4. The internal diameter of the annular reinforcing member 6 is set at a value that is slightly smaller than the external diameter of the pivot-supporting walls 11. Twelve bolt holes 31 are formed in the annular reinforcing member 6 so that these bolt holes 31 face the bolt holes 14 of the flange part 10. The annular reinforcing member 6 is fitted over the two pivot-supporting walls 11 by press fitting so that this annular reinforcing member 6 overlaps with the pinion shaft holes 15 of the two pivot-supporting walls 11; furthermore, the annular reinforcing member 6 is fastened to the flange part 10 by means of bolts 35 so that this annular reinforcing member 6 covers substantially the entire surface of each pivot-supporting part 11a, and a portion of each gear installation opening window 12.

Next, the operation and advantages of the vehicle differential device 1 described above will be described.

In this vehicle differential device 1, when the rotational driving force from the engine is input into the ring gear 5, the gear case 4 rotates about the axial center of the drive shaft 2, and the pinions 22 that are pivotally supported on the gear case 4 by the pinion shaft 23 also revolve about the axial center of the drive shaft. Furthermore, the side gears 21 that engage with the pinions 22 rotate, so that the rotational driving force is transmitted to the drive shaft 2 and driving wheels. Moreover, when the vehicle turns, the pinions 22 rotate about the axial centers of the pinion shaft 23, thus permitting differential motion of the inside and outside driving wheels.

Since the gear case 4 of this vehicle differential device 1 has an integrated structure, gear installation opening windows 12 must be formed. However, the annular reinforcing member 6 is fitted over the pivot-supporting walls 11 so that this member covers substantially the entire surface of each pivot-supporting part 11a and a portion of each gear installation opening window 12, thus reinforcing the gear case 4. Since this annular reinforcing member 6 is integrally constructed with the ring gear 5, there is no increase in the number of parts required in the vehicle differential device 1; furthermore, there is no complication of the structure, almost no increase in the manufacturing cost, and no increase in the number of manufacturing steps for assembly.

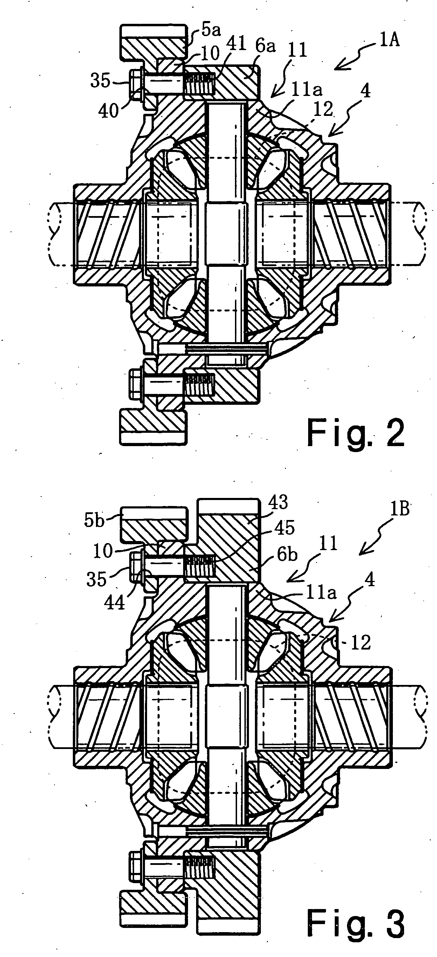

Next, modifications partially modified the abovementioned embodiment will be described. Furthermore, members or parts that are the same as in the abovementioned embodiment are shown with the same numerals, and their descriptions are omitted.
a) As shown in Fig. 2, the annular reinforcing member 6a and ring gear 5a may be constructed as separate parts. Twelve bolt holes 40 are formed in the ring gear 5a at equal intervals in the circumferential direction. The annular reinforcing member 6a is formed in the shape of a ring; the width of this member is set at a width that makes it possible to cover substantially the entire surface of each pivot-supporting part 11a, and the thickness of this member is set at a value that is approximately the same as the height of the flange part 10. Twelve bolt holes 41 are formed in the' annular reinforcing member 6a at equal intervals in the circumferential direction. The annular reinforcing member 6a is fitted over the outside and fastened so that this member covers substantially the entire surface of each pivot-supporting part 11a, and so that the inner circumferential surface of this member contacts the outer circumferential surfaces of the pivot-supporting walls 11. In this vehicle differential device 1A, when the ring gear 5a and annular reinforcing member 6a are attached to the flange part 10 of the gear case 4, these parts are simultaneously fastened to the flange part 10 by the common bolts 35. Accordingly, the annular reinforcing member 6a reinforces the gear case 4 with an integrated structure that has gear installation opening windows 12 without complicating the structure of the vehicle differential device 1A.
b) As shown in Fig. 3, the ring gear 5b and annular reinforcing member 6b may be formed separately, and an output gear 43 may be integrally formed on the outer circumferential part of the annular reinforcing member 6b. The annular reinforcing member 6b is formed in the shape of a ring; the width of this member is set at a width that makes it possible to cover substantially the entire surface of each pivot-supporting part 11a, and the thickness of this member is set at a value that is approximately the same as the height of the flange part 10. The output gear 43 is formed for transmitting the rotational driving force from the engine that is input into the ring gear 5b to the rear wheels in a four wheel drive vehicle. Twelve bolt holes 44 are formed in ring gar 5b at equal intervals in the circumferential direction. The annular reinforcing member 6b is fitted over the outside and fastened so that this member covers substantially the entire surface of each pivot-supporting part 11a, and so that the inner circumferential surface of this member contacts the outer circumferential surfaces of the pivot-supporting walls 11. Twelve bolt holes 45 are formed in the annular reinforcing member 6b at equal intervals in the circumferential direction.
   In this vehicle differential device 1B, the annular reinforcing member 6b is effectively provided; the output gear 43 of the vehicle differential device 1B in a four wheel drive vehicle is formed on the outer circumferential part of the annular reinforcing member 6b, so that the annular reinforcing member 6b and output gear 43 are formed by the same part. Accordingly, the annular reinforcing member 6b can reinforce the gear case 4 (which has an integrated structure that has gear installation opening windows 12) without increasing the number of required parts. Furthermore, since the device is constructed so that the ring gear 5b and annular reinforcing member 6b can be simultaneously fastened to the flange part 10 by the common bolts 35, there is no increase in the number of manufacturing steps for assembly.
c) The annular reinforcing members 6, 6a, 6b are fitted over the pivot-supporting walls 11 by press fitting; however, this mounting is not limited to press fitting. It would also be possible to set the internal diameters of the annular reinforcing members 6, 6a, 6b at a value that is slightly larger than the external shapes of the pivot-supporting parts 11a, so that there is a gap shrinkage 0.03 mm or less between these parts, and to fit the annular reinforcing members 6, 6a, 6b over the pivot-supporting walls by means of a shrinkage fit.
d) It would also be possible to form the outer circumferential surfaces of the pivot-supporting walls with a tapered shape, and to form the inner circumferential surfaces of the annular reinforcing member 6, 6a, 6b with a shape that corresponds to the shape of the outer circumferential surfaces of the pivot-supporting walls 11. Specifically, in the gear case 4 shown in Figs. 1 to 3, the outer circumferential surfaces of the pivot-supporting walls 11 are formed with a diameter decreasing toward the right side, and the inner circumferential surfaces of the annular reinforcing members 6, 6a, 6b are also formed with a diameter decreasing toward the right side. By using such a construction, it is possible to achieve smooth press fitting when the annular reinforcing members 6, 6a, 6b are fitted over the pivot-supporting walls 11 by press fitting.
e) The vehicle differential devices 1, 1A, 1B are embodiments that are applied to a two pinion type vehicle differential device. However, the present invention is not limited to a two pinion type vehicle differential device; it would also be possible to use the annular reinforcing member 6, 6a, 6b in a three pinion type or four pinion type vehicle differential device in which three or four pinion shafts are provided.
f) The vehicle differential devices 1, 1A are embodiments applicable to vehicle differential devices in a front wheel drive vehicle. However, the present invention is not limited to the vehicle differential device of a front wheel drive vehicle. It would also be possible to apply the present invention to the vehicle differential device of a rear wheel drive vehicle. Furthermore, when the present invention is applied to the vehicle differential device of a rear wheel drive vehicle, the ring gear is formed as a helical gear instead of a spur gear.

The present invention is not limited to the embodiments described above; various modifications may be added to the abovementioned embodiment by those skilled in the art within limits that involve no departure from the spirit of the present invention, and the present invention also includes such modifications.

## Claims

1. A vehicle differential device which transmits the rotational driving force from the engine of a vehicle to driving wheels via drive shafts, comprising:
a differential gear mechanism which has a pair of side gears, a plurality of pinions engaged with these side gears, and one or more pinion shafts pivotally supporting these pinions;
a ring gear into which the rotational driving force from said engine is input;
a gear case with an integrated structure which has a flange part to which said ring gear is fastened, a plurality of pivot-supporting walls in which pinion shaft holes supporting the pinion shafts are formed, and gear installation opening windows that are formed between the plurality of pivot-supporting walls, and which accommodates the differential gear mechanism; and
an annular reinforcing member which is fit over the plurality of pivot-supporting walls and fastened so as to overlap with at least the pinion shaft holes of said plurality of pivot-supporting walls.

2. The vehicle differential device according to claim 1, wherein said annular reinforcing member is integrally constructed with the ring gear.

3. The vehicle differential device according to claim 1, wherein said annular reinforcing member is constructed separately from the ring gear, and this annular reinforcing member and the ring gear are fastened to the flange part by a plurality of common bolts.

4. The vehicle differential device according to claim 3, wherein an output gear is formed on the outer circumferential part of said annular reinforcing member separately from said ring gear.

5. The vehicle differential device according to claim 2 or claim 3, wherein said annular reinforcing member is fit over the plurality of pivot-supporting walls and fastened by press fitting.
